# EUROPÄISCHE PATENTANMELDUNG

(11) **EP 4 277 093 A1**
(43) Veröffentlichungstag der Anmeldung: **15.11.2023**
(21) Anmeldenummer: 22172786.0
(22) Anmeldetag: 11.05.2022
(51) Int. Cl.: H02K 11/33, H02K 3/12, H02K 3/50

(54) **GESCHWEISSTE HOCHSTROMVERBINDUNGEN IN DYNAMOELEKTRISCHEN MASCHINEN**

(71) Anmelder: Siemens Aktiengesellschaft, 80333 München (DE)
(72) Erfinder: Richter, Johannes, 90768 Fürth (DE); Weidermann, Christian, 07381 Pößneck (DE)
(74) Vertreter: Siemens Patent Attorneys

(57) **Zusammenfassung**

Die Erfindung betrifft eine rotatorische dynamoelektrische Maschine (1) mit einem Stator (3), der ein Wicklungssystem (30) in einem magnetisch leitfähigen Körper aufweist, und einem Rotor (12), wobei Stator (3) und Rotor (12) durch einen Luftspalt (16) voneinander getrennt sind, wobei die auf einer Stirnseite des magnetisch leitfähigen Körpers des Stators (3) aus jeweils einer Nut (5) ragenden erstes Ende (7) eines Leiterstabes (4) mit mindestens einem Anschlusselement (18) versehen sind, das eine elektrisch niederohmige Kontaktierung zwischen dem ersten Ende (7) des Leiterstabes (4) und mindestens einem Anschlusselement (18) und/oder eine elektrisch niederohmige Kontaktierung zwischen dem Anschlusselement (18) und zumindest einem Wechselrichtermodul (10) aufweist.

## Beschreibung

Die Erfindung betrifft eine dynamoelektrische Maschine, deren Wicklungssystem mit Wechselrichtermodulen elektrisch kontaktiert ist, als auch ein Verfahren zur Herstellung einer derartigen dynamoelektrischen Maschine, insbesondere eines Stators mit einem Kontaktierverfahren.

Wicklungssysteme, also Drähte oder Leiterstäbe in Nuten eines Stators einer dynamoelektrischen Maschine werden über Lötverbindungen oder Crimp-Verbindungen, vorzugsweise über einen Klemmenkasten mit dem elektrischen Netz oder Ausgängen eines Umrichters verbunden.

Dieses Stator-Wicklungssystem besteht üblicherweise aus gewickelten Spulen mit Einzeldraht, Litzenleitern oder Leiterstäben, die dann zu einem elektrischen Wicklungssystem verbunden werden.

Bei vergleichsweise leistungsstarken dynamoelektrischen Maschinen (>500kW) versorgen externe Umrichter (z.B. großer Schaltschrank in einem getrennten Raum) diese Maschine mit vergleichsweise niedrigem Strom und verhältnismäßig hoher Spannung mittels steifer, dicker und isolierter Leitungen.

Aufgrund des üblichen hohen Spannungs-Niveaus zur Leistungsübertragung zwischen Umrichter und Maschine ist es notwendig eine Isolation vorzusehen.

Für die zu übertragenden Ströme werden zur Kontaktierung die genannten Verbindungstechniken, wie Crimp-Hülsen oder Lötverbindungen bereitgestellt.

Ausgehend davon liegt der Erfindung die Aufgabe zugrunde bei einer dynamoelektrischen Maschine eine Kontaktiervorrichtung und ein Kontaktierverfahren bereitzustellen, um vergleichsweise hohe Ströme von einem Umrichtermodul nahezu verlustlos in das Wicklungssystem der dynamoelektrischen Maschine zu übertragen.

Die Lösung der gestellten Aufgabe gelingt durch eine rotatorische dynamoelektrische Maschine mit einem Stator, der ein Wicklungssystem in einem magnetisch leitfähigen Körper aufweist, und einem Rotor, wobei Stator und Rotor durch einen Luftspalt voneinander getrennt sind, wobei die auf einer Stirnseite des magnetisch leitfähigen Körpers des Stators aus jeweils einer Nut ragenden erstes Ende eines Leiterstabes mit mindestens einem Anschlusselement versehen sind, das eine elektrisch niederohmige Kontaktierung zwischen dem ersten Ende des Leiterstabes und mindestens einem Anschlusselement und/oder eine elektrisch niederohmige Kontaktierung zwischen dem Anschlusselement und zumindest einem Wechselrichtermodul aufweist.

Die Lösung der gestellten Aufgabe gelingt auch durch ein Verfahren zur Herstellung eines Stators einer rotatorischen dynamoelektrischen Maschine, der ein Wicklungssystem in einem magnetisch leitfähigen Körper aufweist, durch folgende Schritte:
- Herstellen eines magnetisch leitfähigen Körpers, insbesondere eines Blechpaketes des Stators,
- Kontaktieren zumindest eines Anschlusselementes an ein erstes axiales Ende jeweils eines Leiterstabes einer Nut,
- Axiales Einsetzen der mit den Anschlusselementen versehenen Leiterstäben in die jeweiligen Nuten des Blechpaketes oder magnetisch leitfähigen Körpers,
- Kontaktieren zumindest eines Kurzschlussringes an den zweiten Enden der Leiterstäbe,
- axiales Ansetzen der Wechselrichtermodule an die mit dem Leiterstab kontaktierten Anschlusselemente und Kontaktierung dieser Anschlusselemente mit den vorgesehenen Wechselrichtermodulen mittels Kontaktelementen.

Dabei wird ein erstes Ende eines Leiterstabes mit zumindest einem Wechselrichtermodul mittels eines speziellen Schweißverfahrens elektrisch kontaktiert, insbesondere erfolgt die Kontaktierung über eine Stumpfschweißverbindung. Dabei ist ein Anschlusselement mit dem ersten Ende eines Leiterstabes, der axial aus der Nut des Stators ragt, elektrisch kontaktiert.

Als Stumpfschweißverbindung wird eine Schweißverbindung verstanden, bei der Stirnseiten von massiven Körpern, Drähten, Bolzen, Litzen, in diesem Fall mit einem Anschlusselement, elektrisch kontaktiert werden.

Diese zu verbindenden Bauteile werden dabei fest in die Spannvorrichtung, z.B. Spannbacken, die speziell an die Geometrie der zu schweißenden Teile angepasst sind, fixiert. Die Klemmverbindung stellt eine mechanische Einspannung dar und fixiert und kontaktiert die Fügepartner elektrisch für den Schweißprozess mittels Starkstrom.

Indem die Fügepartner aneinandergepresst werden, bildet sich ein guter Kontakt über die gesamte zu kontaktierende Querschnittsfläche aus. Durch den fließenden Strom werden die gesamten Kontaktstellen zugleich auf Schweißtemperatur (Aufschmelzen) erhitzt. Bei Erreichen der erforderlichen Temperatur über die gesamte Schweißquerschnittsfläche wird je nach Verfahren der Stromfluss unterbrochen und die Bauteile mittels Vorschubbewegung der Elektroden fest aufeinander gestaucht.

Die Pressstumpfschweißung zeichnet sich im Ergebnis durch einen gratfreien dicken Wulst aus. Die zu verschweißenden Bauteile, also die Massivteile, Drähte oder Litzen und das Anschlusselement müssen für ein optimales Schweißergebnis an der Stoßstelle sauber sein, sofern das Isolationsmaterial ein anorganisches und nicht brennbares Material ist. Andere Isolationswerkstoffe, wie Expoxyharze oder Kunststoffe, müssen nicht entfernt werden, diese brennen bei der Pressstumpfschweißung weg, sind also dann frei von einem Isolationsmaterial.

Prinzipiell sind auch Crimp- und Lötverbindungen für diese hohen Betriebs-Stromstärken der dynamoelektrischen Maschine denkbar. Bei Crimpverbindungen sind allerdings die dazugehörigen Hülsen vergleichsweise groß und die dazu benötigten Werkzeuge ebenfalls, so dass der kompakte Aufbau und/oder Zugang ggf. erschwert werden kann. Bei Lötvorgängen ist die Festigkeit der Kontaktverbindung und der Zugang zur Lötstelle zu gewährleisten.

Über das Anschlusselement speisen die Wechselrichtermodule den Betriebsstrom in den Leiterstab, der in einer Nut des Stators angeordnet ist.

Diese Hochstromverbindung zwischen dem ersten Ende des Leiterstabes und einem Anschlusselement wird vor dem axialen Einschieben in die Nut vormontiert und verschweißt. Eine Kontaktierung der Wechselrichtermodule erfolgt erst, wenn der Leiterstab mit seinem Anschlusselement im magnetisch leitfähigen Körper, insbesondere dem Blechpaket des Stators, positioniert ist.

Die Fügepartner - also Leiterstab oder Teilleiter dieses Leiterstabes und das oder die Anschlusselemente werden dabei während des Schweißprozesses durch speziell angepasste Spann- oder Klemmbacken fixiert.

Das Isolationsmaterial an den ersten Enden der Leiterstäbe muss dabei an der Einkoppelstelle bzw. dem späteren Kontaktierbereich zwischen Anschlusselement und erstem Ende des Leiterstabes für den Schweißstrom entfernt werden.

Durch das erfindungsgemäße Verfahren können verschiedene geometrische Ausführungen und Leitermaterialien der Leiterstäbe platzsparend und niederohmig miteinander verbunden werden.

Der Übergangswiderstand bzw. Kontaktwiderstand in der Verbindungsstelle zwischen Anschlusselement und dem ersten Ende des Leiterstabes - also zwischen den Fügepartnern - wird dabei vergleichsweise gering und die Verbindungsstelle wird kompakt ausgeführt, so dass auch bei einer Vielzahl von Verbindungsstellen an einer Stirnseite der dynamoelektrischen Maschine ein kompakter Aufbau mit den Wechselrichtermodulen ermöglicht wird.

### Mit anderen Worten:

Pro Nut ist ein Leiterstab vorgesehen, der ein Anschlusselement aufweist und damit einem oder mehreren Wechselrichtermodulen ermöglicht auf diesen Leiterstab einzuspeisen.

Pro Nut kann ebenso ein Leiterstab in mehrere Teilleiter unterteilt sein, so dass mehrere Anschlusselemente pro Nut vorzusehen sind, wobei dabei ein oder mehrere Wechselrichtermodule auf den oder die jeweiligen Teilleiter dieses Leiterstabes einspeisen.

Am anderen Ende, also den zweiten Enden der Leiterstäbe, werden diese zu einem Kurzschlussring zusammengefasst, also miteinander über den Kurzschlussring elektrisch kontaktiert. Dies erfolgt frühestens dann, wenn alle Leiterstäbe mit ihren Anschlusselementen axial in ihre jeweiligen Nuten eingesetzt worden sind.

Für diese dynamoelektrischen Maschinen mit zumindest einem integrierten Stromrichter bzw. Wechselrichter an jedem ersten Ende eines Leiterstabes ist nunmehr erfindungsgemäß eine elektrische Konfiguration im Stator mit niedrigen Spannungen (<100V) und hohen Stromstärken (>1000A) möglich.

Durch das spezielle Wicklungskonzept des Stators werden Kupferstäbe - ausgeführt als Massivleiter oder als geteilter Leiter - verwendet, so dass Spulen mit der Windungszahl 0,5 entstehen. Damit entfallen die an sich bekannten klassischen Wickelköpfe an den Stirnseiten der magnetisch leitfähigen Körper bzw. Blechpaketen. Damit reduziert sich die axiale Ausladung des Stators und die dynamoelektrische Maschine bzw. der gesamte Antrieb kann damit kompakt ausgeführt werden.

Die Leistungselektronik der Wechselrichtermodule wird an die Leiterstäbe elektrisch angebunden und es können damit vergleichsweise hohe Ströme nahezu verlustfrei übertragen werden. Dadurch können die klassischen, vergleichsweise hochohmigen oder aufwändigen Hochstromverbindungen wie Crimpen, Löten oder Verschrauben vermieden werden.

Dieser Übergang eignet sich insbesondere auch von geteilten oder gelitzten Leitern zu massiven Körpern der Anschlusselemente, z.B. aus Kupfer.

Das spezielle Schweißverfahren, insbesondere zusammen mit den Anschlusselementen, schafft einen vergleichsweise geringen Übergangswiderstand und damit niedrigere Verluste an diesen Kontaktstellen. Dies steigert damit auch die Effizienz der rotatorischen dynamoelektrischen Maschine und damit des gesamten Antriebs. Außerdem wird die mechanische Festigkeit der Verbindungsstellen bzw. Kontaktstellen verbessert und somit robuster.

Die Stumpf-Schweißverbindung ermöglicht individuelle Geometrien des an die Leiter angeschweißten Kupfer-Adapters. Aufgrund der dadurch gewonnenen, geometrischen Freiheitsgrade lässt sich die integrierte Leistungselektronik bzw. Wechselrichtermodule ohne zusätzlichen Bauraum, platzsparend anbinden und an der Stirnseite des Stators anordnen.

Aufgrund der Vorabkontaktierung des Anschlusselements mit dem Leiterstab wird Montagezeit der dynamoelektrischen Maschine eingespart, da diese Vormontage außerhalb der Maschine stattfindet. Eventuelle Lötverbindungen in der dynamoelektrischen Maschine sind ggf. nur noch an den zweiten Enden der Leiterstäbe zur Ausbildung des Kurzschlussringes an der anderen Stirnseite des Stators notwendig.

Dieses Wicklungssystem mittels Leiterstäbe führt durch den Wegfall aufwändiger Wickelverfahren zu einer einfacheren Endmontage der Statoren der dynamoelektrischen Maschine und damit des gesamten Antriebs.

Die Erfindung sowie weitere vorteilhafte Ausgestaltungen der Erfindung werden anhand prinzipiell dargestellter Ausführungsbeispiele näher erläutert, darin zeigen:
- FIG 1: dynamoelektrische Maschine,
- FIG 2 bis 4: mögliche Leiterstäbe,
- FIG 5: axiale Unterteilung eines Leiterstabes,
- FIG 6, 7: Kontaktierung eines WR-Moduls an einem Leiterstab,
- FIG 8, 9: weitere Kontaktierung von WR-Modulen an einen Leiterstab,
- FIG 10 bis 17: mögliche Ausgestaltungen und Kontaktierungen von Anschlusselement und Leiterstab.

Es sei angemerkt, dass sich Begriffe wie "axial", "radial", "tangential" etc. auf die in der jeweiligen Figur bzw. im jeweils beschriebenen Beispiel zum Einsatz kommende Achse 15 beziehen. Mit anderen Worten beziehen sich die Richtungen axial, radial, tangential stets auf eine Achse 15 des Rotors 12 und damit auf die entsprechende Symmetrieachse des Stators 3. Dabei beschreibt "axial" eine Richtung parallel zur Achse 15, "radial" beschreibt eine Richtung orthogonal zur Achse 15, auf diese zu oder auch von ihr weg, und "tangential" ist eine Richtung, die in konstantem radialem Abstand zur Achse 15 und bei konstanter Axialposition kreisförmig um die Achse 15 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 12 und Stator 3, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte auch durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen miteinander kombinierbar, ohne das Wesen der Erfindung zu verlassen.

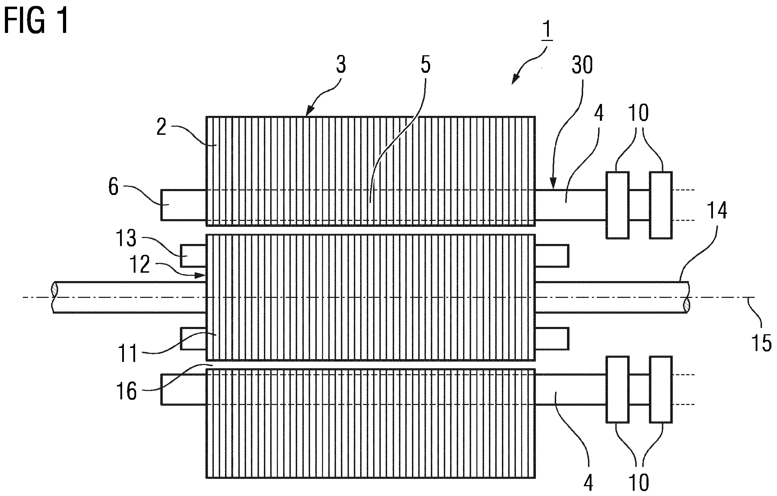

FIG 1 zeigt in einem prinzipiell dargestellten Längsschnitt eine dynamoelektrische Maschine 1, wobei ein Rotor 12, der aus axial geschichteten Blechen aufgebaut ist, als Kurzschlussläufer ausgeführt ist, der an den Stirnseiten des Blechpakets 11 jeweils einen Kurzschlussring 13 aufweist. Das Blechpaket 11 des Rotors 12 ist drehfest mit einer Welle 14 verbunden, die um eine Achse 15 drehbar gelagert ist. Der Rotor 12 ist von einem Stator 3 umgeben. Stator 3 und Rotor 12 sind durch einen Luftspalt 16 voneinander beabstandet. Der magnetisch leitfähige Körper des Stators 3 wird ebenfalls von einem Blechpaket 2 gebildet. In im Wesentlichen axial verlaufenden Nuten 5 des Blechpakets 2 des Stators 3 sind Leiterstäbe 4 angeordnet, die auf einer Stirnseite des Blechpakets 2 einen Kurzschlussring 6 bilden. Auf der anderen Seite des Blechpakets 2 ist den ersten Leiterstabenden 7 jeweils ein oder mehrere Wechselrichtermodule 10 angeordnet.

Im Betrieb der dynamoelektrischen Maschine 1 kann nunmehr jeder Leiterstab 4 einzelnen über sein jeweiliges Wechselrichtermodul 10 oder seine Wechselrichtermodule 10 angesteuert werden, so dass sich die dynamoelektrische Maschine 1 u.a. mit unterschiedlichen Polpaarzahl betreiben lassen kann. Ebenso lässt sich somit im Betrieb der dynamoelektrischen Maschine 1 eine Änderung des magnetischen radialen Zugs einstellen. Des Weiteren ist es möglich, auf Schwingungen der dynamoelektrischen Maschine 1 zu reagieren, und diese dann durch dementsprechende Ansteuerung des jeweiligen Leiterstabes 4 zu dämpfen oder zu vermeiden.

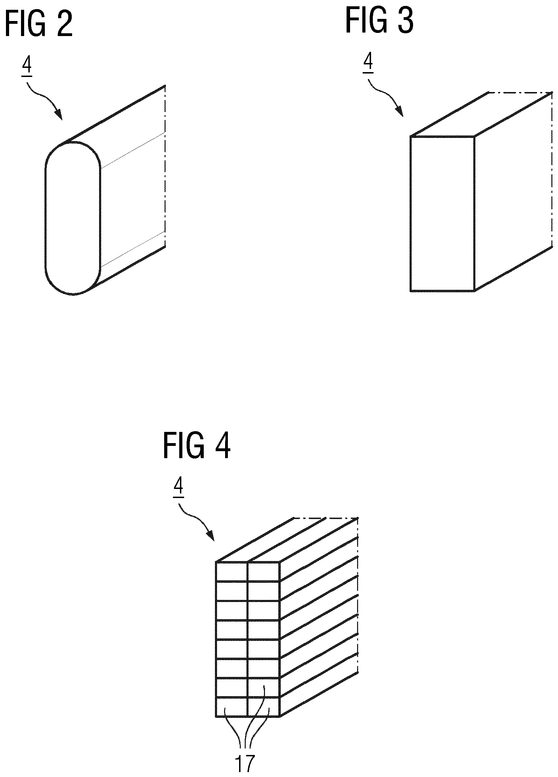

Der Leiterstab 4, der in einer Nut 5 des Blechpakets 2 Stators 3 angeordnet ist kann beispielhaft gemäß den FIG 2 bis 4 ausgeführt sein. FIG 2 und FIG 3 zeigen einen Leiterstab 4, der einstückig ausgeführt ist, also aus einem massiven Leiter besteht. Die Leiterstäbe nach FIG 2 und FIG 3 weisen jedoch unterschiedliche Querschnittsformen auf, um der jeweiligen Querschnittsform einer Nut 5 zu entsprechen.

FIG 4 zeigt beispielhaft einen Leiterstab 4, der in parallel verlaufende Teilleiter 17 unterteilt ist. Damit lassen sich gewisse Stromverdrängungseffekte, die bei größeren Leiterquerschnitten entstehen, vermeiden. Des Weiteren ergibt sich durch einen derartigen Leiteraufbau gemäß FIG 4 die Möglichkeit eine vorgebbare Anzahl von Teilleitern 17 eines Leiterstab 4 über ein separates Wechselrichtermodul 10 anzusteuern.

Mit anderen Worten, ein Leiterstab 4, der aus einer vorgebbaren Anzahl von Teilleitern 17 aufgebaut ist, kann in Untergruppen aufgeteilt sein, wobei jede Untergruppe einem oder mehreren Wechselrichtermodulen 10 elektrisch zuordenbar und kontaktierbar ist.

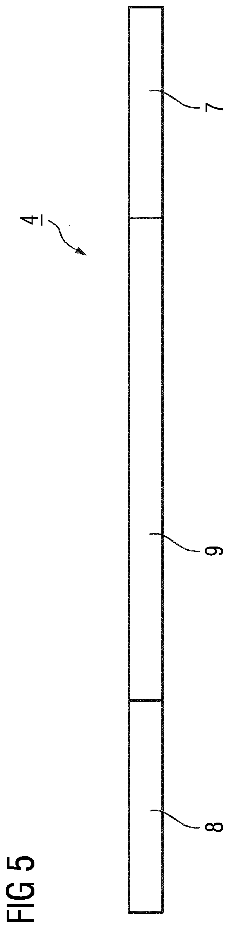

FIG 5 zeigt einen beispielhaften Leiterstab 4, der in axiale Abschnitte unterteilt ist. Ein erstes axiales Ende 7 des Leiterstabes 4 ist zur Kontaktierung mit dem oder den Wechselrichtermodulen 10 vorgesehen. Das zweite axiale Ende 8 des Leiterstabes 4 auf der anderen Seite des Blechpakets 2 des Stators 3 - also auf der gegenüberliegenden Stirnseite - ragt aus dem Blechpaket des Stators 3 und wird dort mit anderen Leiterstäben 4, die aus ihren jeweiligen Nuten 5 ragen mit einem Kurzschlussring 6 versehen. Dieser Kurzschlussring 6 des Stators 3 kann dabei direkt an dem Blechpaket 2 des Stators 3 anliegen oder von dem Blechpaket 2 des Stators 3 beabstandet angeordnet sein.

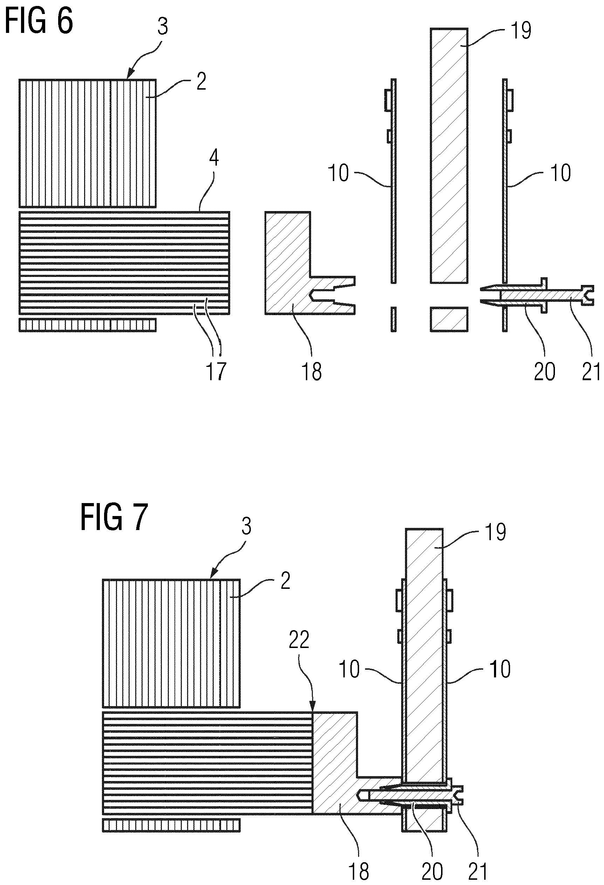

FIG 6 zeigt einen beispielhaften die Komponenten einer Kontaktierung eines Wechselrichter-Moduls 10 an einen Leiterstab 4. Der Leiterstab 4 (hier bereits in der Nut 5 des Stators 3 angeordnet) ist aus Teilleitern 17 aufgebaut. Des Weiteren ist ein Anschlusselement 18 vorgesehen, das einen Adapter zwischen dem Leiterstab 4 und den oder dem Wechselrichtermodul 10 bildet. Das Wechselrichtermodul 10 wird durch ein Kontaktelement 20 und einen Bolzen 21 an dem Anschlusselement 18 niederohmig elektrisch kontaktiert. Das Anschlusselement 18 ist durch eine niederohmige elektrische Verbindung mit dem Leiterstab 4, insbesondere den Teilleitern 17 des Leiterstabes 4 verbunden. Dabei sind vorzugsweise Stumpf-Schweißverbindungen zur Kontaktierung zwischen dem Leiterstab 4 und dem Anschlusselement 18 vorgesehen.

FIG 7 zeigt in zusammengebautem Zustand die Kontaktierung, in diesem Fall zwei Wechselrichtermodule 10, über das Kontaktelement 20 zum Anschlusselement 18. Um eine ausreichende niederohmige Kontaktierung zu erhalten, wird der Bolzen 21 in eine dementsprechend korrespondierende Ausnehmung des Anschlusselementes 18 eingesetzt und fixiert.

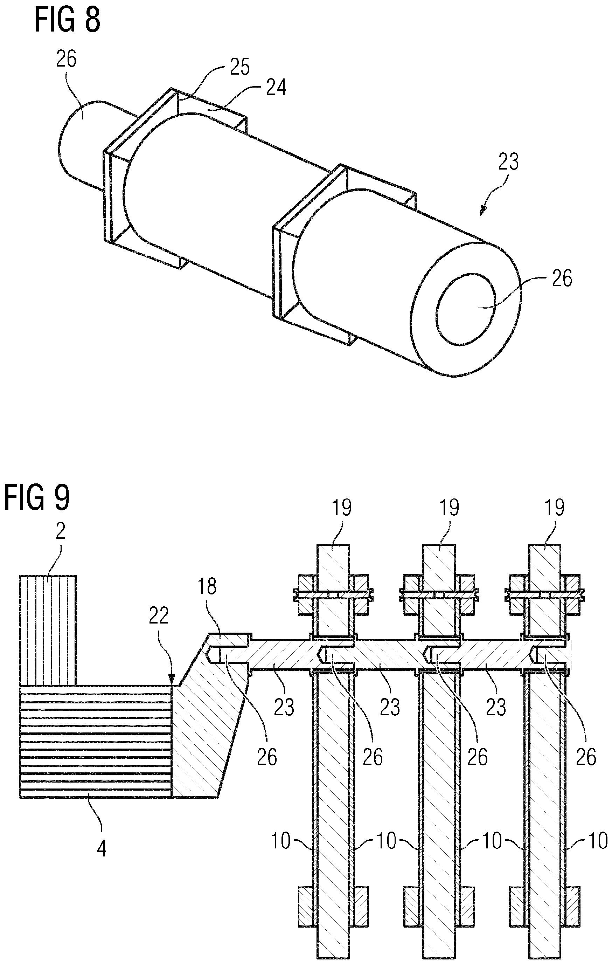

In einer weiteren Ausgestaltung gemäß FIG 9 werden nunmehr die Wechselrichtermodule 10 mittels eines Kontaktbolzens 23 gemäß FIG 8 mit dem Anschlusselement 18 kontaktiert. Die Kontaktierung des Kontaktbolzens 23 zum Anschlusselement 18 gelingt über eine Female/Male-kontaktierung 26 und eignet sich außerdem zur axialen Verlängerung dieser Kontaktierung, so dass sich mehrere Wechselrichtermodule 10 axial hintereinander anordnen lassen. Diese axiale Hintereinanderanordnung der Wechselrichtermodule 10 dient unter anderem der Leistungsaufteilung innerhalb der Wechselrichter Module 10 pro Leiterstab 4 als auch einer angestrebten Redundanz.

Vorteilhafterweise sind dabei dann zwischen den Wechselrichtermodulen 10 Kühlplatten 19 angeordnet.

FIG 8 zeigt in einer perspektivischen Darstellung den Kontaktbolzen 23 mit umlaufenden Stegen 24, in denen Schlitze 25 vorgesehen sind. Die umlaufenden Stege 24 bilden die Kontaktflächen zu den einzelnen Wechselrichtermodulen 10, die den Strom vom Wechselrichtermodul 10 über den Kontaktbolzen 23 und das Anschlusselement 18 in den Leiterstab 4 führen. Um eine ausreichende Kontaktierung der Stege 24 am Wechselrichtermodul 10 zu erhalten, sind Schlitze 25 im Steg 24 vorgesehen. Dadurch, dass der Kontaktbolzen 23 auf einer Seite eine axiale Vertiefung aufweist, lassen sich, wie prinzipiell in FIG 9 dargestellt, mehrere Female/Male-kontaktierung 26 axial hintereinander anordnen, um mehrere Wechselrichtermodule 10 hintereinanderschalten zu können.

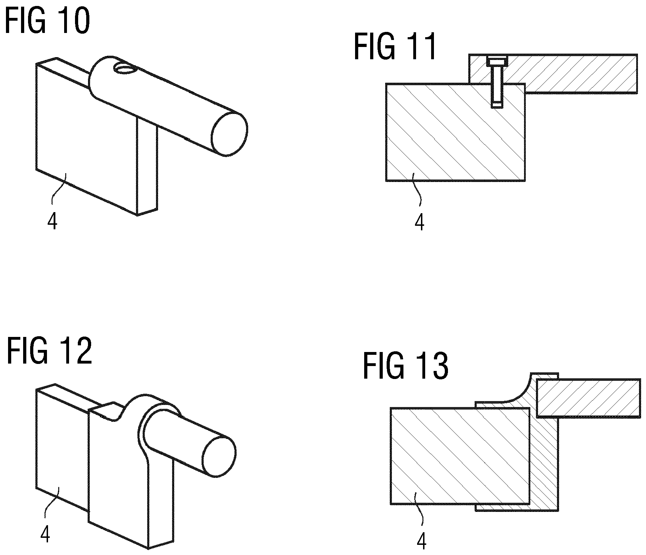

FIG 10 und FIG 11 zeigen in perspektivischer Darstellung und in einem prinzipiell dargestellten Längsschnitt eine weitere Möglichkeit, eine Kontaktierung zwischen einem Leiter, von den Wechselrichtermodul 10 kommend, mit einem Leiterstab 4 zu kontaktieren. In diesem Fall geschieht dies durch eine Schraubverbindung, die vorzugsweise für einstückige Leiterstäbe 4 geeignet ist.

FIG 12 und FIG 13 zeigen in perspektivischer Darstellung und in einem prinzipiell dargestellten Längsschnitt eine weitere Möglichkeit, eine Kontaktierung zwischen einem Leiter, von einem Wechselrichtermodul 10 kommend, mit einem Leiterstab 4 zu erhalten. Dabei sind zwischen Leiter und Anschlusselement 18 als auch zwischen Anschlusselement 18 und Leiterstab 4 geschraubt gepresste und/oder geschweißte Verbindungen möglich.

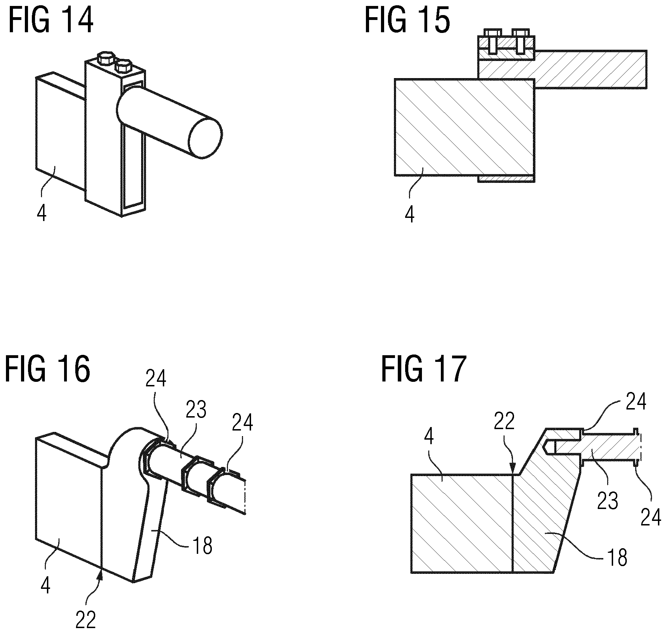

FIG 14 und FIG 15 zeigen in perspektivischer Darstellung und in einem prinzipiell dargestellten Längsschnitt eine weitere Möglichkeit, eine Kontaktierung zwischen einem Leiter, von den Wechselrichtermodul 10 kommend, mit einem Leiterstab 4 zu erhalten. Dabei wird eine Kontaktierung zwischen den zu kontaktierenden Partnern über eine Schraub-Pressverbindung geschaffen.

FIG 16 und FIG 17 zeigen in perspektivischer Darstellung und in einem prinzipiell dargestellten Längsschnitt eine bevorzugte Möglichkeit, eine Kontaktierung zwischen einem Leiter, von den Wechselrichtermodul 10 kommend, mit einem Leiterstab 4 zu erhalten, indem dort eine erfindungsgemäße Schweißnaht 22 vorgesehen wird.

## Patentansprüche

1. Rotatorische dynamoelektrische Maschine (1) mit einem Stator (3), der ein Wicklungssystem (30) in einem magnetisch leitfähigen Körper aufweist, und einem Rotor (12), wobei Stator (3) und Rotor (12) durch einen Luftspalt (16) voneinander getrennt sind, wobei die auf einer Stirnseite des magnetisch leitfähigen Körpers des Stators (3) aus jeweils einer Nut (5) ragenden erstes Ende (7) eines Leiterstabes (4) mit mindestens einem Anschlusselement (18) versehen sind, das eine elektrisch niederohmige Kontaktierung zwischen dem ersten Ende (7) des Leiterstabes (4) und mindestens einem Anschlusselement (18) und/oder eine elektrisch niederohmige Kontaktierung zwischen dem Anschlusselement (18) und zumindest einem Wechselrichtermodul (10) aufweist.

2. Rotatorische dynamoelektrische Maschine (1) nach Anspruch 1, **dadurch gekennzeichnet, dass** die anderen zweiten Enden (8) der Leiterstäbe (4) an der anderen Stirnseite des magnetisch leitfähigen Körpers des Stators (3) zu einem Kurzschlussring (6) zusammengefasst sind.

3. Rotatorische dynamoelektrische Maschine (1) nach Anspruch 1 oder 2, **dadurch gekennzeichnet, dass** der Leiterstab (4) einstückig oder auf mehrere Teilleiter (17) aufgeteilt ist.

4. Rotatorische dynamoelektrische Maschine (1) nach einem der vorhergehenden Ansprüche, **dadurch gekennzeichnet, dass** das Anschlusselement (18) als axial unterteilbarer Kontaktbolzen (23) ausgebildet ist.

5. Rotatorische dynamoelektrische Maschine (1) nach einem der vorhergehenden Ansprüche, **dadurch gekennzeichnet, dass** zwischen zwei oder mehreren axial hintereinander angeordneten Wechselrichtermodulen (10) Kühlscheiben (19) zwischen den Wechselrichtermodulen (10) vorgesehen sind, die zumindest abschnittsweise in wärmeleitendem Kontakt mit den benachbarten Wechselrichtermodulen (10) stehen.

6. Verfahren zur Herstellung eines Stators (3) einer rotatorischen dynamoelektrischen Maschine (1), der ein Wicklungssystem (30) in einem magnetisch leitfähigen Körper aufweist, durch folgende Schritte:
- Herstellen eines magnetisch leitfähigen Körpers, insbesondere eines Blechpaketes (2) des Stators (3),
- Kontaktieren zumindest eines Anschlusselementes (18) an ein erstes axiales Ende (7) jeweils eines Leiterstabes (4) einer Nut (5),
- Axiales Einsetzen der mit den Anschlusselementen (18) versehenen Leiterstäben (4) in die jeweiligen Nuten (5) des Blechpaketes (2) oder magnetisch leitfähigen Körpers,
- Kontaktieren zumindest eines Kurzschlussringes (6) an den zweiten Enden (8) der Leiterstäbe (4),
- axiales Ansetzen der Wechselrichtermodule (10) an die mit dem Leiterstab (4) kontaktierten Anschlusselemente (18) und Kontaktierung dieser Anschlusselementen (18) mit den vorgesehenen Wechselrichtermodulen (10) mittels Kontaktelementen (20,26).

7. Verfahren zur Herstellung eines Stators (3) einer rotatorischen dynamoelektrischen Maschine (1) nach Anspruch 6, **dadurch gekennzeichnet, dass** die Kontaktierung des Anschlusselementes (18) an ein erstes axiales Ende (7) jeweils eines Leiterstabes (4) mittels Stumpfschweißen erfolgt.

8. Verfahren zur Herstellung eines Stators (3) einer rotatorischen dynamoelektrischen Maschine (1) nach Anspruch 6 oder 7, **dadurch gekennzeichnet, dass** die Kontaktierung des Anschlusselementes (18) an ein erstes axiales Ende (7) jeweils eines Leiterstabes (4) vorab erfolgt.

9. Verfahren zur Herstellung eines Stators (3) einer rotatorischen dynamoelektrischen Maschine (1) nach einem der Ansprüche 6 bis 8, **dadurch gekennzeichnet, dass** die Fügepartner - also Anschlusselemente (18) und Leiterstab (4) - mittels Klemmbacken während der Kontaktierung fixiert werden.

10. Verfahren zur Herstellung eines Stators (3) einer rotatorischen dynamoelektrischen Maschine (1) nach einem der Ansprüche 6 bis 9, **dadurch gekennzeichnet, dass** vorhandene Isolationsmaterialien an Leiterstab (4) und/oder Anschlusselement (18) zumindest an dem Bereich der Fügestelle entfernt werden, insbesondere wegbrennen.

11. Verwendung einer rotatorischen dynamoelektrischen Maschine (1) nach Anspruch 1 bis 5 oder eines Stators, hergestellt nach einem der Ansprüche 6 bis 10, in einer rotatorischen dynamoelektrischen Maschine (1) im industriellen Umfeld, insbesondere bei Verdichtern, Kompressoren oder Pumpen.
